# EUROPEAN PATENT SPECIFICATION

(11) **EP 3 054 365 B1**
(45) Date of publication and mention of the grant of the patent: **26.02.2020**
(21) Application number: 15154061.4
(22) Date of filing: 06.02.2015
(51) Int. Cl.: G05D 23/02, F24D 19/10, G05G 5/04

(54) **Thermostat**
Thermostat
Thermostat

(43) Date of publication of application: 10.08.2016
(73) Proprietor: Rettig ICC B.V., 6199 AA Maastricht-Airport (NL)
(72) Inventor: Arvidsson, Thomas, 34135 Ljungby (SE); Bernhardsson, Anders, 28540 Markaryd (SE); Nilsson, Peter, 35592 Växjö (SE); Logeke, Svante, 35236 Växjö (SE)
(74) Representative: AWA Sweden AB

(56) References cited:
- EP-A1- 0 694 722
- EP-A2- 0 903 525
- GB-A- 2 172 382

## Description

### Technical field

The present disclosure relates to a thermostat for a radiator. The thermostat has a base part, which is adapted to be fixed in relation to a valve of the radiator, and a knob, which is attached, turnably around an axis, to the base part in such a way that it can be used to change the setting of the thermostat within a given range by turning the knob. The thermostat further includes at least a first adjustable limiter defining an extreme setting, such that the knob is optionally rotatable only within a sub-portion of said given range as defined by the first limiter.

### Background

Such thermostates are widely used in connection with fluid conveying heating systems in colder climates. The limiters may be used to make sure that the thermostat is correctly used according to the circumstances of the particular installation. For instance, it may be prevented by means of a limiter that the valve to which the thermostat is connected is completely shut off to avoid freezing. It may further be avoided by means of a limiter that the room temperature becomes too high, potentially saving plenty of energy. Nevertherless, one single thermostat type may be adapted to a number of situations.

EP0694722 and EP0903525 disclose thermostats which have at least one adjustable limiter.

One problem associated with thermostates of this kind is how to make them easier to use for installation professionals.

### Summary

An object of the present disclosure is therefore to provide a thermostat that is easier to use. This object is achieved by means of a thermostat as defined in claim 1. More specifically, a thermostat of the initially mentioned kind then further comprises a releasing mechanism arranged for responding to axial movement of the knob, along the axis around which it is turnable and relative to the base part, that releases the limiter, such that the extreme setting can be changed, wherein the first adjustable limiter comprises a ring and a tab attached to the ring, wherein the tab when defining an extreme setting being disposed in at least a first grove compartment in the base portion, the release mechanism comprising a ramp surface that, in response to the axial movement of the knob, lifts the tab out of the first groove compartment, such that the tab can be moved to another groove compartment corresponding to a different extreme setting.

This means that the setting can be changed simply by moving the knob to the extreme setting position, pushing the knob in, turning the knob to a new setting, and releasing the knob. No special tools are needed and the operation may be very quick. At the same time, this function may be hidden to an end user, who may possibly be unauthorized to change the extreme setting.

The thermostat may further comprise a second limiter, and the first limiter may define a maximum setting, and the second a minimum setting, such that the knob is rotatable only within a sub-portion of said given range between the minimum and maximum settings, and wherein both the first and second limiter can be released by said axial movement of the knob. This allows both a maximum and a minimum setting to be changed in this way.

The first and second adjustable limiters may each comprise a ring and a tab attached to the ring, the tab when defining a maximum or minimum setting being disposed in a first groove compartment in the base portion, the release mechanism comprising a ramp surface that, in response to the axial movement of the knob, lifts the tab out of the first groove compartment, such that the tab can be moved to another groove compartment corresponding to a different maximum or minimum setting. This is one convenient way of arranging the limiter. The ring allows the limiter to be rotated around the base part, and the tab provides the limiting function once in place in a groove compartment. The ring and tab may be made in one piece in injection moulded plastic.

The tab may be adapted to straddle at least one wall in between two adjacent groove compartments such that the tab extends into the two compartments. This allows for a finer tuning of the maximum-minimum settings, and may improve resistance to high applied torques, turning the knob against a limiter.

Each tab may comprise, at its distal end, a radial projection that reaches radially out of the groove compartment where the tab is located. The knob may be connected to an inward projecting abutment portion that abuts such a radial projection when reaching a maximum or minimum level.

The axial movement of the knob may be a movement towards a front cavity of the thermostat, which is adapted for accommodating a connecting part of a radiator valve. Further, a part of the knob may be covered by an outer sleeve, and the outer sleeve may comprise a free space allowing the axial movement of the knob. A locking device may be provided, e.g. in connection with the free space, preventing the axial movement of the knob until the locking device has been released, in order to prevent unauthorized changing of the settings.

### Brief description of the drawings

Fig 1 shows a thermostat.
Fig 2 is a cross section through a thermostat.
Fig 3 shows an enlarged portion of fig 2.
Fig 4 shows a part of a maximum-minimum arrangement.
Fig 5 shows a minimum ring alone.
Fig 6 shows a thermostat with the knob removed to expose a maximum-minimum arrangement.
Fig 7 shows an enlarged portion of fig 6.
Fig 8 shows a cross section corresponding to fig 3, but in a mode where maximum-minimum setting can be carried out.
Fig 9 shows an enlarged portion of fig 8.
Fig 10 shows an alternative embodiment of the base part and the maximum/minimum rings.
Fig 11 shows an enlarged portion of fig 10.

### Detailed description

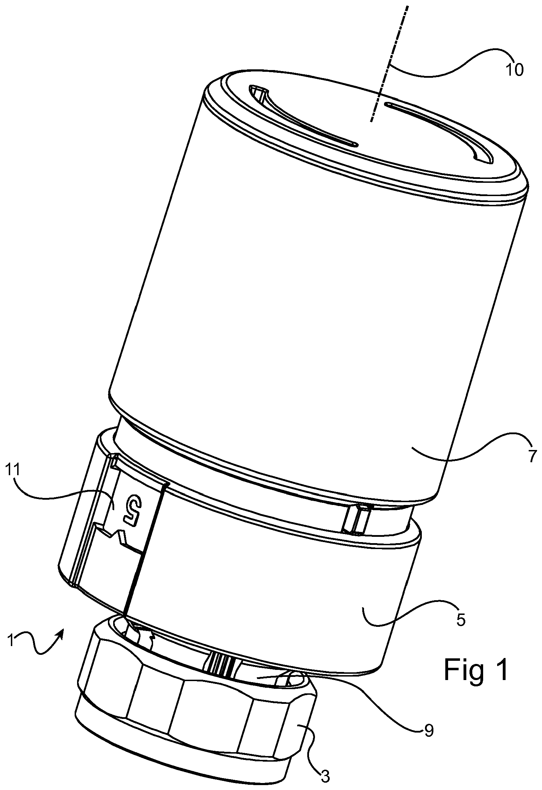

The present disclosure relates to a thermostat for a radiator. An example of a thermostat 1 is shown in fig 1 and includes a connecting nut 3, for connecting the thermostat 1 to the valve (not shown in fig 1) of a radiator, and a sleeve 5, which is fixed in relation to the valve when the connecting nut 3 is tightened. The thermostat further comprises a knob 7 that is turnably attached to a base part 9, which is connected to the sleeve 5, in such a way that the knob 7 can be used to change the setting of the thermostat, and as a result change the flow of a heating medium through the radiator. In the illustrated case, a window 11 is provided in the sleeve 5, and a digit "5" marked on the knob is visible through the window to indicate the present setting of the thermostat.

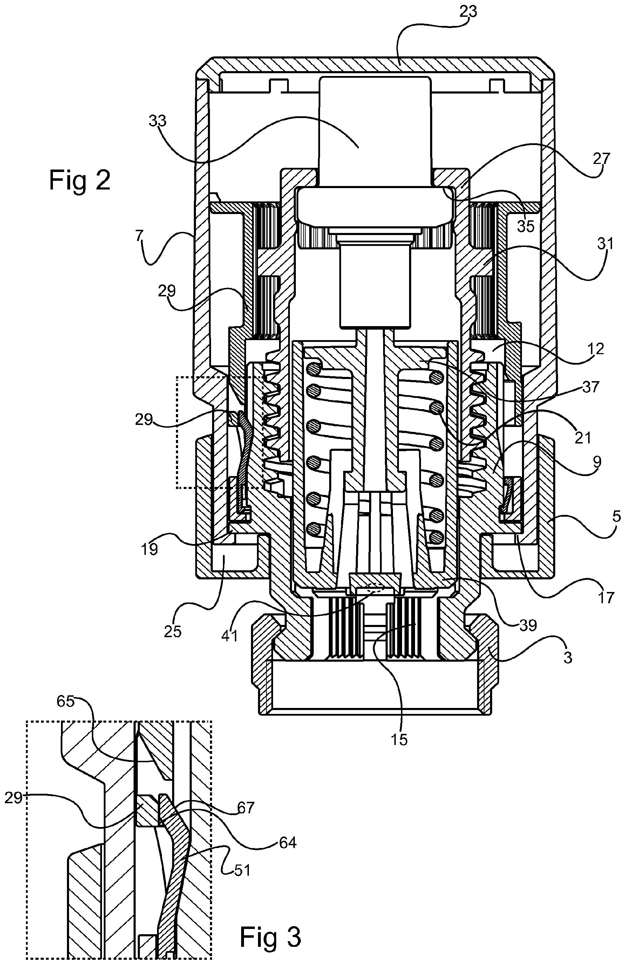

Fig 2 is a cross section through a thermostat, and fig 3 shows an enlarged portion of fig 2. The thermostat is built on the base part 9, which has a front cavity 15 for accommodating the connecting part of a radiator valve, to which the thermostat is firmly connected by means of the nut 3. The inner walls of the front cavity 15 may as illustrated be fluted, and the opposing surfaces of the valve connecting part may be fluted as well to prevent that the thermostat swivels around the valve. As mentioned, a connecting nut 3 of the thermostat can be tightened to a corresponding threaded part on the valve in order to fix the thermostat to the valve.

The knob 7 is formed as a hollow cylinder, and a circumferential collar portion 17 at its inner end (facing the valve) may be arranged to rest against a circumferential shoulder portion 19 on the base part 9, such that the knob 7 can rotate around the base part 9, but is prevented from moving further away from the valve. The collar portion 17 of the knob 7 may be urged against the shoulder portion 19 of the base part 9 by means of a spring (not shown) which may be arranged in a space 12 between the base part 9 and and an intermediate member 29 that will be discussed further later. The outer end of the knob 7 cylinder is closed by an end lid 23.

The sleeve 5 is fixedly attached to the base part 9 and may as illustrated reach out and cover the inner part of the knob 7 to provide some constructional stability and to provide the aforementioned indicating window. The indicating digits, e.g. "5" shown in fig 1, are placed on the part of the knob 7 that are covered by the sleeve 5. A free space 25 may be provided in the sleeve 5 at the inner end of the knob cylinder, to allow the knob 7 to be moved a few millimetres inwards, as will be discussed later.

Inside the knob 7, a sensor holder 27 is disposed, which has an overall hollow cylindrical shape. The sensor holder 27 is attached to the knob 7 via an intermediate member 29 attached to the knob. The intermediate member 29 presents a fluted inner cylindrical surface to a correspondingly fluted flange 31 of the sensor holder 27, which means that the intermediate member 29 fixes the sensor holder 27 radially, and forces the sensor holder 27 to rotate with the knob 7, while allowing a linear movement relative to the knob 7 along the aforementioned axis (cf. 10, fig 1). At the same time, the front part of the sensor holder, closest to the radiator, is in threaded engagement with the base part 9. This means that turning the knob 7 will displace the sensor holder 27 axially within the thermostat.

A wax sensing element 33 in a casing, which is not shown in cross section in fig 2, is disposed within the sensor holder 27 and rests against an inward facing collar portion 35 at the rear end thereof as seen from the radiator. The wax sensing element 33 reacts on changing ambient room temperature by expanding and contracting as is well known per se. The wax sensing element 33 influences a piston 37, 39, 41, a part of which 37 reaches into the casing of the wax sensing element 33. A region 41 at the opposing end of the piston in turn operates against the pin of the radiator valve to which the thermostat is connected. The piston with an inner overload spring 21 are enclosed in a front part of the sensor holder. A spring in the valve urges via the radiator pin the piston against the wax sensor element 33 in order to obtain a correct displacement of the piston 37 when the wax sensing element 33 contracts. The piston itself can contract in the case of an overload condition, if the force of the compressed overload spring 21 is overcome, such that the front parts 41, 39 move closer to the part 37, reaching into the wax sensor. The ability to axially adjust the position of the sensor holder means that a user can set the valve-thermostat characteristics such that a desired room temperature is obtained.

As such, the thermostate is capable to be adjusted to a wide range target room temperatures. In many cases however, it is desired to optionally limit this range into a narrower range. For instance, a landlord may want to limit the energy consumption during cold seasons which implies that the maximal setting should be limited. Further, to avoid risk of freezing, it may be desired to limit the minimal setting as well.

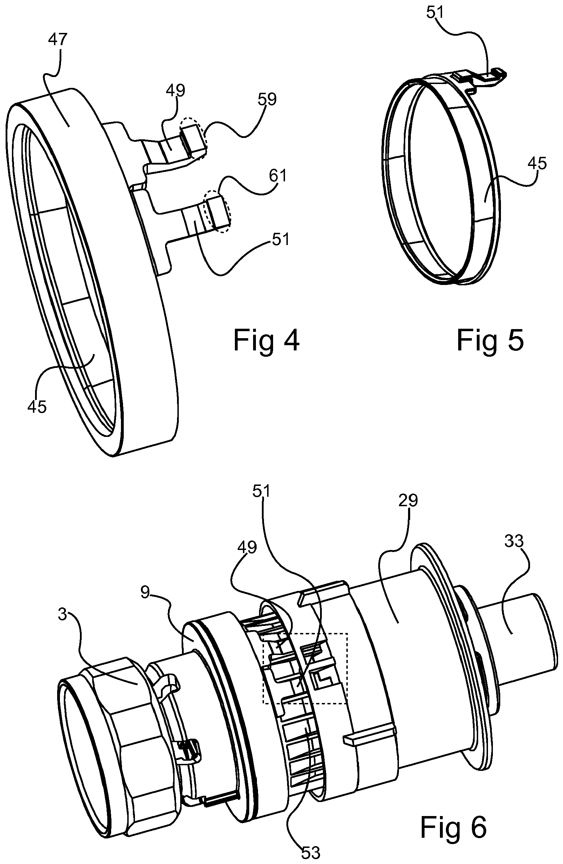

Figs 4-7 illustrate together with the aforementioned fig 3, a maximum-minimum arrangement that can be used to achieve this feature. Fig 4 shows a maximum ring 47 and a minimum ring 45 assembled together. Fig 5 shows the minimum ring 45 alone. The minimum ring 45 and the maximum ring 47 may be made in a plastic material by injection moulding, and may be more or less identical save for a small difference in diameter, such that one may be slipped over the other. The minimum ring 45 and the maximum ring 47 are each formed in one piece with a maximum tab 49 and a minimum tab 51, respectively, which project from each ring in an axial direction. When assembled, as shown in fig 6, the maximum and minimum rings 47, 45 are attached slipped over the base part 9, surrounding the latter, and each of the maximum tab 49 and the minimum tab 51 are snapped into a groove compartment 53 (also visible in fig 3) in the base part periphery. As the rings 45, 47 are attached slipped over the base part 9, they may rotate around the base part when the respective tab 49, 51 is lifted from its groove compartment.

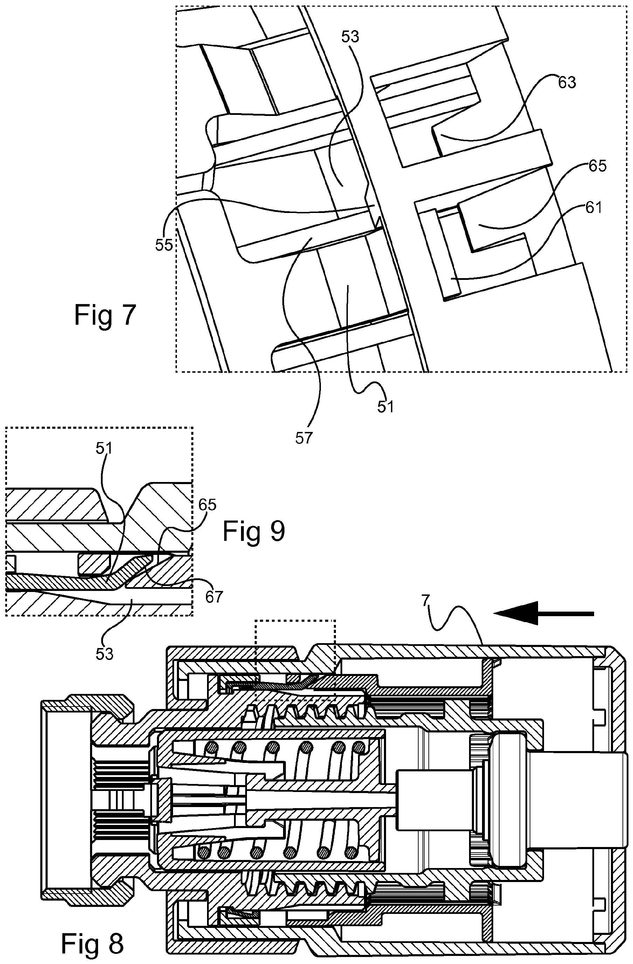

Fig 6 shows the intermediate member 29, connected to the knob (cf. 7 fig 2), which knob is removed in fig 6 to more clearly reveal the maximum-minimum arrangement. The intermediate member 29, at the end where the tabs 49, 51 are located, has an inward projecting abutment portion 55 as is more clearly shown in the enlarged view of fig 7. The abutment portion reaches almost down to the walls 57 that define the groove compartments 53 but still allows the intermediate member 29 to rotate freely, except past a groove compartment 53 where a maximum or minimum tab is located.

As is shown e.g. in fig 4 each tab 49, 51 comprises, at its end, a radial projection 59, 61 that reaches out of the groove compartment where the tab is located. When reaching a tab, the abutment portion 55 of the intermediate member will therefore abut the radial projection 59, 61, and will not be able to rotate further as the tab is trapped in the groove compartment 53. As is illustrated in the enlarged cross section fo fig 3, an inward facing surface 64 of the intermediate member 29 prevents the tab 51 from leaving the groove compartment in this state. However, the tab 51 may also have a shape that urges the tab into the groove compartment, providing a pre-tension towards the centre line of the thermostat.

In the situation shown in fig 6, the range has been extremely limited, as only one free groove compartment 53 exists between the maximum and minimum tabs 49, 51. This is mainly done for illustration purposes, but may be useful in a real situation where a termostat should be more or less fixed to a setting. The knob can only be turned a few degrees, resulting in a very small axial adjustment of the sensor holder.

The present disclosure provides for a very simple adjustment of the maximum-minimum arrangement. In the intermediate member 29, at both sides of the abutment portion 55, there is provided a ramp surface 63, 65 in front of a position where the maximum or minimum tab 49, 51 is located when coming into contact with the abutment portion 55. As previously mentioned, the free space 25 provided in the sleeve 5 (cf. fig 2) at the inner end of the knob cylinder, allows the knob 7 to be moved a few millimetres towards the radiator valve. This allows, starting from the position best shown in fig 3, the ramp surface 65 to interact with a correspondingly sloped surface 67 (hidden in fig 6, cf. fig 3) on the inner side of the tab 51 and to lift the tab 51 out of the groove compartment where it has been trapped.

This state is illustrated in fig 8 and in the enlarged portion of fig 9, where the sloped surface 67 rises on the ramp surface 65 forcing the tab 51 out of the groove compartment 53. In this state, by rotating the knob 7, the lifted tab 51 and its corresponding ring 47 can be freely rotated in any direction to another groove compartment where, the tab 51 can be placed by releasing the knob 7. The movement is however still limited by the other tab that remains in its groove compartment. The knob 7 returns to the initial axial position by means of a return spring (not shown), and the tab snaps into said another groove compartment.

Thus, by turning the knob e.g. to the maximum setting, pushing the knob in, rotating the knob in either direction, and releasing the knob, the maximum setting can be adjusted. The minimum setting can be adjusted in the same way. The maximum-minimum settings can therefore be changed easily, without the use of tools.

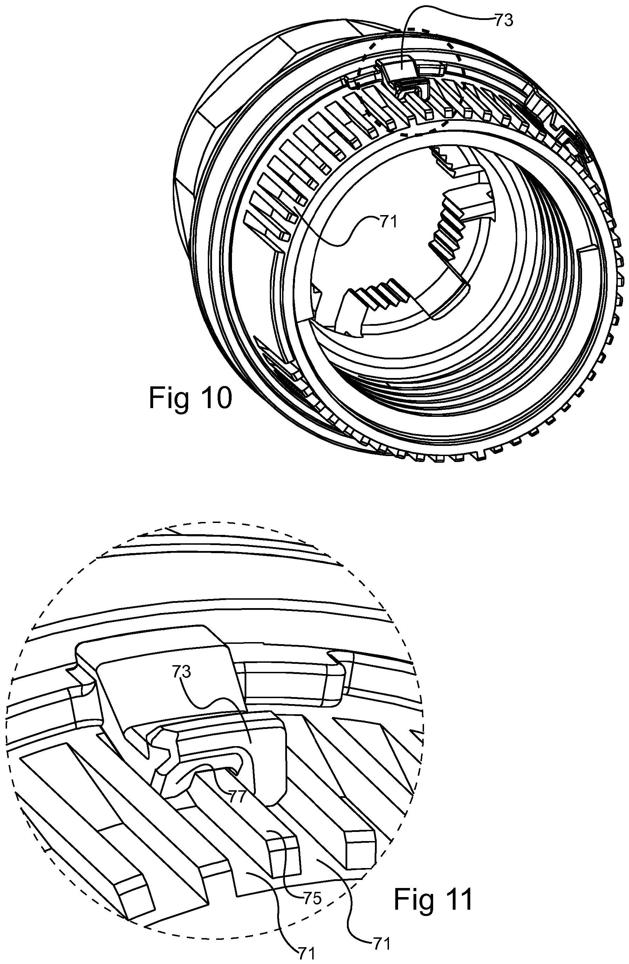

Fig 10 shows an alternative embodiment of the base part and the maximum/minimum rings in a perspective view as seen from the end distant from the location of the radiator valve. In this embodiment, the groove compartments 71 have been made narrower (about 1 mm as compared to about 3 mm in the version shown in fig 7), such that a much higher number of such grooves can be provided for a given circumference. This allows for a finer tuning of the maximum mimimum settings. The tab, 73 can be modified such that it is capable of straddling one wall 75 in between two adjacent groove compartments 71. Thereby, the tab 73 can be inserted into the two groove compartments. In addition to providing an additional structural strength to the tab itself, this reduces the stress on each wall portion 75 in the tangential direction when the tab 73 acts as a stop, since that stress becomes split between two such walls. As illustrated in fig 11, only one of the tab parts exending into the groove compartments need be provided with a ramp surface 77, such that the other part may have a greater structural strength.

A locking device may be provided e.g. in the free space 25 of fig 2 preventing the axial movement of the knob 7 until e.g. a sprint (not shown) extending through the sleeve 5 has been removed, if unauthorized changing of the max/min settings is to be prevented.

The present disclosure is not restricted to the embodiments shown and may be varied in different ways within the scope of the appended claims. For instance, while the present disclosure illustrates a thermostat where the limiters become adjustable by pushing the knob towards the radiator valve, the skilled person could consider a varied embodiment where the knob is instead pulled away from the radiator valve to achieve the same effect. Additionally, it may be considered to use only one limiter, with a single, extreme (max or min) setting. Further, an embodiment could be considered where a tab extends in the opposite direction from its corresponding ring, i.e. in the direction towards the radiator. In such a case, the ring may instead be attached to the intermediate part and may be designed to enter a groove compartment in the base portion.

## Claims

1. A thermostat (1), for a radiator, including a base part (9), which is adapted to be fixed in relation to a valve of the radiator, and a knob (7), which is attached, turnably around an axis (10), to the base part in such a way that it can be used to change the setting of the thermostat within a given range by turning the knob, and at least a first adjustable limiter (47, 49), the first limiter (47, 49) defining an extreme setting, such that the knob (7) is optionally rotatable only within a sub-portion of said given range as defined by the first limiter, wherein said thermostat (1) further comprises a releasing mechanism (63, 65) arranged for responding to axial movement of the knob (7), along said axis (10) and relative to the base part (9), that releases the first limiter (47, 49), such that the extreme setting can be changed, **characterized in that** the first adjustable limiter comprises a ring (45) and a tab (49, 73) attached to the ring, wherein the tab when defining an extreme setting being disposed in at least a first groove compartment (53) in the base portion (9), the release mechanism comprising a ramp surface that, in response to the axial movement of the knob (7), lifts the tab out of the first groove compartment, such that the tab can be moved to another groove compartment corresponding to a different extreme setting.

2. A thermostat according to claim 1, further comprising a second limiter (45, 51), wherein the first limiter defines a maximum setting, and the second limiter defines a minimum setting, such that the knob (7) is rotatable only within a sub-portion of said given range between the minimum and maximum settings, and wherein both the first and second limiter can be released by said axial movement of the knob.

3. A thermostat according to claim 2, wherein the first and second adjustable limiters each comprise a ring (45, 47) and a tab (49, 51, 73) attached to the ring, the tab when defining a maximum or minimum setting being disposed in at least a first groove compartment (53) in the base portion (9), the release mechanism comprising a ramp surface that, in response to the axial movement of the knob (7), lifts the tab out of the first groove compartment (53), such that the tab can be moved to another groove compartment corresponding to a different maximum or minimum setting.

4. A thermostat according to anyone of claims 1-3, wherein a tab (73) is adapted to straddle at least one wall (75) in between two adjacent groove compartments (71) such that the tab extends into two compartments.

5. A thermostat according to anyone of claims 1-4, wherein the ring (45) and tab (51) are made in one piece in injection moulded plastic.

6. A thermostat according to anyone of claims 1-5, wherein each tab (49, 51) comprises, at its end, a radial projection (59, 61) that reaches radially out of the groove compartment (53) where the tab is located, and wherein the knob (7) is connected to an inward projecting abutment portion (55) that abuts either of said radial projections (59, 61) when reaching a maximum or minimum setting.

7. A thermostat according to anyone of the preceding claims, wherein said axial movement of the knob (7) is a movement towards a front cavity (15) of the thermostat, adapted for accommodating a connecting part of a radiator valve.

8. A thermostat according to claim 7, wherein a part of the knob (7) is covered by an outer sleeve (5), and said outer sleeve comprises a free space (25) allowing said axial movement of the knob (7).

9. A thermostat according to anyone of the preceding claims, wherein a locking device is provided preventing the axial movement of the knob (7) until the locking device has been released.

## Patentansprüche

1. Thermostat (1) für einen Heizkörper, der ein Basisteil (9), das angepasst ist, um in Bezug auf ein Ventil des Heizkörpers angebracht zu werden, und einen Knopf (7), der drehbar um eine Achse (10) am Basisteil derart angebracht ist, dass er verwendet werden kann, um die Einstellung des Thermostats innerhalb eines vorgegebenen Bereichs durch Drehen des Knopfes zu ändern, und mindestens einen ersten einstellbaren Begrenzer (47, 49) aufweist, wobei der erste Begrenzer (47, 49) eine Extremeinstellung definiert, derart dass der Knopf (7) wahlweise nur innerhalb eines Teilbereichs des gegebenen Bereichs, wie er durch den ersten Begrenzer definiert ist, drehbar ist, wobei der Thermostat (1) ferner einen Freigabemechanismus (63, 65) umfasst, der angeordnet ist, um auf eine axiale Bewegung des Knopfes (7) entlang der Achse (10) und relativ zum Basisteil (9) zu reagieren, der den ersten Begrenzer (47, 49) freigibt, derart dass die Extremeinstellung geändert werden kann, **dadurch gekennzeichnet, dass** der erste einstellbare Begrenzer einen Ring (45) und eine am Ring befestigte Lasche (49, 73) umfasst, wobei die Lasche beim Definieren einer Extremeinstellung in mindestens einer ersten Nutaussparung (53) im Basisabschnitt (9) angeordnet ist, wobei der Freigabemechanismus eine Rampenfläche umfasst, die als Reaktion auf die axiale Bewegung des Knopfes (7) die Lasche aus der ersten Nutaussparung heraushebt, derart dass die Lasche zu einer anderen Nutaussparung bewegt werden kann, die einer anderen Extremeinstellung entspricht.

2. Thermostat nach Anspruch 1, ferner umfassend einen zweiten Begrenzer (45, 51), wobei der erste Begrenzer eine Maximaleinstellung definiert und der zweite Begrenzer eine Minimaleinstellung definiert, derart dass der Knopf (7) nur innerhalb eines Teilbereichs des gegebenen Bereichs zwischen der Minimal- und Maximaleinstellung drehbar ist, und wobei sowohl der erste als auch der zweite Begrenzer durch die Axialbewegung des Knopfs freigegeben werden kann.

3. Thermostat nach Anspruch 2, wobei jeweils der erste und der zweite einstellbare Begrenzer einen Ring (45, 47) und eine am Ring befestigte Lasche (49, 51, 73) umfasst, wobei die Lasche, wenn eine Maximal- oder Minimaleinstellung definiert wird, in mindestens einer ersten Nutaussparung (53) im Basisabschnitt (9) angeordnet ist, wobei der Freigabemechanismus eine Rampenfläche umfasst, die als Reaktion auf die axiale Bewegung des Knopfes (7) die Lasche aus der ersten Nutaussparung (53) heraushebt, derart dass die Lasche zu einer anderen Nutaussparung bewegt werden kann, die einer anderen Extremeinstellung entspricht.

4. Thermostat nach einem der Ansprüche 1-3, wobei eine Lasche (73) angepasst ist, um mindestens eine Wand (75) zwischen zwei benachbarten Nutaussparungen (71) zu überspannen, derart dass sich die Lasche in zwei Aussparungen erstreckt.

5. Thermostat nach einem der Ansprüche 1-4, wobei der Ring (45) und die Lasche (51) einstückig aus spritzgegossenem Kunststoff hergestellt sind.

6. Thermostat nach einem der Ansprüche 1-5, wobei jede Lasche (49, 51) an ihrem Ende einen radialen Vorsprung (59, 61) umfasst, der radial aus der Nutaussparung (53) herausreicht, in dem sich die Lasche befindet, und wobei der Knopf (7) mit einem nach innen vorstehenden Anschlagabschnitt (55) verbunden ist, der bei Erreichen einer Maximal- oder Minimaleinstellung an einem der radialen Vorsprünge (59, 61) anliegt.

7. Thermostat nach einem der vorhergehenden Ansprüche, wobei die axiale Bewegung des Knopfes (7) eine Bewegung in Richtung eines vorderen Hohlraums (15) des Thermostats ist, der zur Aufnahme eines Verbindungsteils eines Heizkörperventils angepasst ist.

8. Thermostat nach Anspruch 7, wobei ein Teil des Knopfes (7) von einer Außenhülse (5) bedeckt ist und die Außenhülse einen Freiraum (25) aufweist, der die axiale Bewegung des Knopfes (7) ermöglicht.

9. Thermostat nach einem der vorhergehenden Ansprüche, wobei eine Verriegelungsvorrichtung vorgesehen ist, die die axiale Bewegung des Knopfes (7) verhindert, bis die Verriegelungsvorrichtung gelöst worden ist.

## Revendications

1. Thermostat (1) pour un radiateur, comprenant une partie de base (9) adaptée pour être fixée par rapport à une soupape du radiateur, et un bouton (7) fixé, de façon rotative autour d'un axe (10), à la partie de base de manière à pouvoir être utilisé pour modifier le réglage du thermostat dans une plage donnée en tournant le bouton, et au moins un premier limiteur réglable (47, 49), le premier limiteur réglable (47, 49) définissant un réglage extrême, de telle façon que le bouton (7) peut être tourné facultativement uniquement dans une sous-partie de ladite plage donnée telle que définie par le premier limiteur, dans lequel ledit thermostat (1) comprend en outre un mécanisme de libération (63, 65) conçu pour répondre au mouvement axial du bouton (7), le long dudit axe (10) et par rapport à la partie de base (9), lequel libère le premier limiteur (47, 49) de manière à pouvoir modifier le réglage extrême, **caractérisé en ce que** le premier limiteur réglable comprend un anneau (45) et une languette (49, 73) fixée à l'anneau, la languette étant disposée dans au moins un premier compartiment de rainure (53) dans la partie de base (9) lorsque celle-ci définit un réglage extrême, le mécanisme de libération comprenant une surface de rampe relevant la languette hors du premier compartiment de rainure en réponse au mouvement axial du bouton (7), de telle façon que la languette peut être déplacée vers un autre compartiment de rainure correspondant à un réglage extrême différent.

2. Thermostat selon la revendication 1, comprenant en outre un deuxième limiteur (45, 51), dans lequel le premier limiteur définit un réglage maximum, et le deuxième limiteur définit un réglage minimum, de telle façon que le bouton (7) peut être tourné uniquement dans une sous-partie de ladite plage entre les réglages minimum et maximum, et dans lequel les premier et deuxième limiteurs peuvent être libérés par ledit mouvement axial du bouton.

3. Thermostat selon la revendication 2, dans lequel les premier et deuxième limiteurs réglables comprennent un anneau (45, 47) et une languette (49, 51, 73) fixé à l'anneau, la languette étant disposée dans au moins un premier compartiment de rainure (53) dans la partie de base (9), lorsque celle-ci définit un réglage maximum ou minimum, le mécanisme de libération comprenant une surface de rampe relevant la languette hors du premier compartiment de rainure (53) en réponse au mouvement axial du bouton (7), de telle façon que la languette peut être déplacée vers un autre compartiment de rainure correspondant à un réglage maximum ou minimum différent.

4. Thermostat selon l'une quelconque des revendications 1 à 3, dans lequel une languette (73) est adaptée pour chevaucher au moins une paroi (75) entre deux compartiments de rainure (71) adjacents, de telle façon que la languette s'étend dans deux compartiments.

5. Thermostat selon l'une quelconque des revendications 1 à 4, dans lequel l'anneau (45) et la languette (51) sont constitués d'une seule pièce en plastique moulé par injection.

6. Thermostat selon l'une quelconque des revendications 1 à 5, dans lequel chaque languette (49, 51) comprend, à son extrémité, une saillie radiale (59, 61) s'étendant radialement vers l'extérieur du compartiment de rainure (53) où se trouve la languette, et dans lequel le bouton (7) est relié à une partie de butée faisant saillie vers l'intérieur (55), laquelle bute contre l'une quelconque desdites saillies radiales (59, 61) lors de l'atteinte d'un réglage maximum ou minimum.

7. Thermostat selon l'une quelconque des revendications précédentes, dans lequel ledit mouvement axial du bouton (7) est un mouvement vers une cavité frontale (15) du thermostat, adaptée pour recevoir une partie de raccordement d'une soupape de radiateur.

8. Thermostat selon la revendication 7, dans lequel une partie du bouton (7) est recouverte par un manchon extérieur (5), et ledit manchon extérieur comprend un espace libre (25) permettant ledit mouvement axial du bouton (7).

9. Thermostat selon l'une quelconque des revendications précédentes, dans lequel il est prévu un dispositif de blocage empêchant le mouvement axial du bouton (7) jusqu'à la libération du dispositif de blocage.
